(19) Europäisches Patentamt
European Patent Office
Office européen des brevets

(11) **EP 2 463 615 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(51) Int Cl.:
*G01B 5/012* *(2006.01)*  *G01B 5/28* *(2006.01)*
*G01B 11/00* *(2006.01)*  *G01B 11/30* *(2006.01)*

(21) Anmeldenummer: **11187602.5**

(22) Anmeldetag: **03.11.2011**

(54) **Tastsystem zur Erfassung der Form, des Durchmessers und/oder der Rauhigkeit einer Oberfläche**

Sensor system for detecting the shape, diameter and/or roughness of a surface

Système de balayage pour la détection de la forme, du diamètre et/ou de la rugosité d'une surface

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2010 DE 102010062626**

(43) Veröffentlichungstag der Anmeldung:
**13.06.2012 Patentblatt 2012/24**

(73) Patentinhaber: **Robert Bosch GmbH**
**70442 Stuttgart (DE)**

(72) Erfinder: **Drabarek, Pawel**
**75233 Tiefenbronn (DE)**

(56) Entgegenhaltungen:
**EP-A1- 1 407 224    EP-A2- 1 528 354**
**DE-A1- 4 327 250    US-A- 5 955 661**

**Beschreibung**

Stand der Technik

Die Erfindung betrifft ein Tastsystem einer Messmaschine mit einem taktilen Abtastsystem mit einem zugeordneten Tastarm zur berührenden Erfassung der Form, des Durchmessers und/oder der Rauhigkeit einer Oberfläche und mit einem optischen Abtastsystem zur optischen Erfassung der Form, des Durchmessers und/oder der Rauhigkeit der Oberfläche, wobei für die Erfassung der Auslenkung des Tastarms des taktilen Abtastsystems und für die optische Erfassung der Form, des Durchmessers und/oder der Rauhigkeit der Oberfläche durch das optische Abtastsystem ein gleiches optisches Messsystem mit einer gemeinsamen optischen Auswerteeinheit verwendet ist,

Die Erfindung betrifft weiterhin ein Verfahren zur Erfassung der Form, des Durchmessers und/oder der Rauhigkeit einer Oberfläche mit einer Messmaschine mit einem taktilen Abtastsystem mit einem zugeordneten Tastarm zur berührenden Erfassung der Form, des Durchmessers und/oder der Rauhigkeit der Oberfläche und mit einem optischen Abtastsystem zur optischen Erfassung der Form, des Durchmessers und/oder der Rauhigkeit der Oberfläche, wobei die Auslenkung des Tastarms des taktilen Abtastsystems und optisch die Form und/oder die Rauhigkeit der Oberfläche nach einem gleichen optischen Messverfahren mit einem gleichen optischen Messsystem und einer gemeinsamen optischen Auswerteeinheit erfasst werden.

Die DE 43 27 250 A1 zeigt ein Koordinatenmessgerät und ein damit durchgeführtes Verfahren zur Koordinatenmessung an Werkstücken. Das Koordinatenmessgerät trägt eine Videokamera und einen mechanischen Tastkopf mit einem Tastelement zur berührenden Vermessung einer Werkstückoberfläche. Die mechanisch anzutastenden Stellen am Werkstück werden unter visueller Kontrolle mit Hilfe eines an die Videokamera angeschlossenen Monitors angefahren, wozu sich das Tastelement im Sehfeld der Videokamera befindet.

In der WO 03/008905 A1 sind ebenfalls ein Koordinatenmessgerät und ein damit durchgeführtes Verfahren zur Messung von Oberflächeneigenschaften eines Werkstücks angegeben. Das Koordinatenmessgerät umfasst ein sich auf der Oberfläche abstützendes und relativ zu dieser bewegbares Antastformelement, dessen Position unmittelbar oder mittels einer zugeordneten Marke mit einem optischen Sensor erfasst wird. Als optischer Sensor wird ein optoelektronischer Abtastsensor verwendet, mit dem wahlweise unmittelbar die Oberflächeneigenschaften gemessen werden oder über den mittelbar oder unmittelbar die Position des Abtastelements oder der zugeordneten Marke gemessen wird. Als Abtastformelement kann ein opto-taktil arbeitender Fasertaster verwendet werden, wobei der Abtastsensor als Beleuchtung für den Fasertaster verwendet wird.

Auch die EP 1 528 354 A2 zeigt ein Koordinatenmessgerät und ein damit durchgeführtes Verfahren zum Messen eines Objekts beziehungsweise dessen Oberfläche, wozu ein Antastformelement und eine optische Sensorik zur Erfassung der Lage desselben vorhanden sind. Um eine dreidimensionale Lagebestimmung des Antastformelements zu ermöglichen wird vorgeschlagen, dass die optische Sensorik einen Abstandssensor und einen Bildverarbeitungssensor umfasst, die einen gemeinsamen optischen Strahlengang aufweisen. Mittels des Abstandssensors und des Bildverarbeitungssensors ist die räumliche Lage des Abtastformelements unmittelbar oder mittels einer Zielmarke bestimmbar und mittels des Abstandssensors und/oder des Bildverarbeitungssensors ist die Oberfläche des Objekts messbar.

US 5 955 661 A1 zeigt ein Oberflächenmessgerät, welches ein taktiles Abtastsystem mit Tastarm und ein optisches Abtastsystem für eine optische Profilmessung aufweist. Zwischen beiden Sensoren kann schnell hin und her geschaltet werden.

Für die optische Erfassung der Form, des Durchmessers und/oder der Rauhigkeit von Oberflächen sind ferner interferometrisch arbeitende optische Messsysteme mit einem Modulationsinterferometer und einem diesem nachgeordneten Referenzinterferometer bekannt. Diese werden zur optischen Abstandsmessung, beispielsweise in der Qualitätssicherung bei der Messung von Oberflächengeometrien, benutzt. Die EP 1 058 812 B1 beschreibt eine solche interferometrische Messeinrichtung zum Erfassen der Form oder des Abstandes insbesondere rauher Oberflächen mit mindestens einer räumlich kohärenten Strahlerzeugungseinheit, deren Strahlung in einer Messsonde der Messeinrichtung in einen durch einen Messreferenzzweig geführten und darin reflektierten Referenzmessstrahl und in einen durch einen Messzweig geführten und an der rauhen Oberfläche reflektierten Messstrahl aufgeteilt wird, mit einer Einrichtung zur Modulation der Licht-Phase oder zum Verschieben der Licht-Frequenz entsprechend einer Heterodynfrequenz eines ersten Teilstrahls gegenüber der Licht-Phase oder der Licht-Frequenz eines zweiten Teilstrahls mit einer Überlagerungseinheit zum Überlagern des reflektierten Messreferenzstrahls mit dem reflektierten Messstrahl mit einer Strahlzerlegungs- und Strahlempfangseinheit zum Aufspalten der überlagerten Strahlung auf zumindest zwei Strahlen mit unterschiedlichen Wellenlängen und Umwandeln der Strahlung in elektrische Signale und mit einer Auswerteeinrichtung, in der die Form bzw. der Abstand der rauhen Oberfläche auf der Grundlage einer Phasendifferenz der elektrischen Signale bestimmbar ist. Dabei ist es vorgesehen, dass die von der Strahlerzeugungseinheit abgegebene Strahlung zeitlich kurzkohärent und breitbandig ist, dass die Strahlerzeugungseinheit, ein Strahlteiler zum Bilden des ersten und zweiten Teilstrahls und die Einrichtung zur Phasenmodulation oder Frequenzverschiebung in einer von der Messsonde räumlich beabstandeten, als Modulationsinterferometer ausgebildeten Baueinheit angeordnet sind und dass in der Baueinheit in dem Strahlengang eines Teilstrahls ein Verzögerungselement angeordnet ist, das eine Differenz der optischen Weglängen der beiden Teilstrahlen ergibt, die länger als die Kohärenzlänge der von der Strahlerzeugungseinheit abgegebenen Strahlung ist.

Solche zunächst aus zwei Interferometern bestehenden interferometrischen Messeinrichtungen können mit unterschiedlichen Interferometertypen aufgebaut sein. So kann das Modulationsinterferometer als Mach-Zehnder Interferometer aufgebaut sein, während das Messinterferometer beziehungsweise die Messsonde kompakt, beispielsweise als Mirau-Interferometer, aufgebaut ist. Gemeinsam ist den interferometrischen Messeinrichtungen, dass ein in dem ersten Interferometer eingeschriebener Gangunterschied zwischen zwei Teilstrahlen von einer kurzkohärenten Strahlungsquelle in dem zweiten Messinterferometer beziehungsweise der Messsonde wieder ausgeglichen wird und so die Teilstrahlen zur Interferenzbildung gebracht werden. Der in der EP 1 058 812 B1 durch ein Verzögerungselement eingeschriebene Gangunterschied kann dabei auch durch unterschiedlich lange Teilarme, welche von den Teilstrahlen durchlaufen werden, erzeugt werden, wie es in der EP 1 058 812 B1 in einem mit Lichtleitern aufgebauten Modulationsinterferometer dargestellt ist.

Um die Messgenauigkeit der interferometrischen Messeinrichtung zu verbessern ist es bekannt, an einen zweiten Ausgang des Modulationsinterferometers ein Referenzinterferometer anzuschließen. Es ist optisch ebenso aufgebaut wie das Messinterferometer, d.h., es gleicht den im Modulationsinterferometer eingeschriebenen Gangunterschied zwischen den zwei Teilstrahlen wieder aus. Der konstruktive Aufbau des Referenzinterferometers unterscheidet sich jedoch von dem des Messinterferometers. Die Messgenauigkeit der interferometrischen Messeinrichtung lässt sich durch Vergleich der Signale des Referenzinterferometers mit denen des Messinterferometers verbessern.

Der in dem Modulationsinterferometer einzuschreibende Gangunterschied richtet sich nach der konstruktiven Ausführung des Messinterferometers beziehungsweise der Messsonde.

Neben dem beschriebenen Modulationsinterferometer sind weitere optische, punktmessende Tastsystem und Messverfahren zur Bestimmung von Oberflächenkonturen und Rauhigkeiten bekannt, beispielsweise Autofokus-Sensoren, Triangulation, chromatische Sensoren und Weisslicht-Interferometer.

Weiterhin sind taktile Tastsysteme, in denen Oberflächen mit einem Tastarm abgetastet werden, bekannt. Dabei ist es weiterhin bekannt, die Bewegung des Tastarms interferometrisch zu bestimmen, wie dies beispielsweise in dem Messgerät Form Talysurf Series 2 der Firma Taylor Hobson umgesetzt ist.

In einem Prospekt der Formmessmaschine MFU 100WP der Firma Mahr wird ein Tastsystem beschrieben, in dem ein optischer oder taktiler Tastarm verwendet wird. Dabei sind die Auswertesysteme für die taktile und die optische Abtastung voneinander unabhängig.

Es ist Aufgabe der Erfindung, ein kostengünstiges Tastsystem bereitzustellen, welches eine optische und taktile Erfassung der Form, des Durchmessers und/oder der Rauhigkeit von Oberflächen ermöglicht.

Es ist weiterhin Aufgabe der Erfindung, ein Verfahren zum Betrieb eines solchen Tastsystems bereitzustellen.

Offenbarung der Erfindung

Die das Tastsystem betreffende Aufgabe der Erfindung wird dadurch gelöst, dass für die Erfassung der Auslenkung des Tastarms des taktilen Abtastsystems und für die optische Erfassung der Form, des Durchmessers und/oder der Rauhigkeit der Oberfläche durch das optische Abtastsystem ein gleiches optisches Messsystem mit einer gemeinsamen optischen Auswerteeinheit verwendet ist. Es wird somit für die taktile und für die optische Erfassung der Oberfläche nur eine optische Auswerteeinheit benötigt, wodurch ein kostengünstiger Aufbau ermöglicht ist. Dabei wird durch die optische Erfassung der Auslenkung des Tastarms eine hohe Genauigkeit der berührenden Erfassung der Oberfläche erreicht, und ein einfacher Aufbau wird dadurch erhalten, dass ein Messstrahl der optischen Auswerteeinheit durch einen Strahlteiler oder einen optischen Schalter in zwei Teilstrahlen aufgeteilt ist, dass ein erster Teilstrahl zu dem taktilen Abtastsystem und dort auf einen mit dem Tastarm des taktilen Abtastsystems mechanisch gekoppelten Reflektor geführt ist, dass ein zweiter Teilstrahl über das optische Abtastsystem zu der Oberfläche geführt ist und dass der von dem Reflektor reflektierte erste Teilstrahl und der von der Oberfläche reflektierte zweite Teilstrahl zu einer Auswerteelektronik der optischen Auswerteeinheit geführt sind. Bei dem Aufbau werden sowohl die Strahlerzeugungseinheit wie die Auswerteelektronik der optischen Auswerteeinheit für die optische und taktile Erfassung der Oberfläche verwendet. Dabei ermöglicht der Aufbau mit dem Strahlteiler eine kontinuierliche, zeitgleiche taktile und optische Messung oder eine abwechselnde taktile und optische Messung. Bei Verwendung eines optischen Schalters kann abwechselnd taktil oder optisch gemessen werden. Der Tastarm überträgt seine durch die Bewegung über die Oberfläche bewirkte Auslenkung auf den mechanisch an den Tastarm gekoppelten Reflektor. Durch die optische Bestimmung der Auslenkung des Reflektors kann so auf die Form und die Rauhigkeit der Oberfläche geschlossen werden. Dabei ist im einfachsten Fall der Reflektor als Teil des Tastarms ausgebildet.

Bei der Messmaschine kann es sich beispielsweise um eine Formmessmaschine, eine Koordinatenmessmaschine oder eine Multisensor-Messmaschine handeln.

Die optische Erfassung sowohl der Auslenkung des Tastarms wie der Form und der Rauhigkeit der Oberfläche kann dadurch erreicht werden, dass das optische Messsystem als Weisslicht-Heterodyn-Interferometer oder als Weisslicht-Interferometer oder mit einem chromatischen Sensor oder mit einem Autofokus-Sensor aufgebaut ist. Die Wahl des optischen Messsystems richtet sich dabei nach der geforderten Genauigkeit der Messung.

Ist es vorgesehen, dass der zweite Teilstrahl zur optischen Erfassung der Form, des Durchmessers und/oder der Rauhigkeit der Oberfläche durch den Tastarm des taktilen Abtastsystems zu der Oberfläche geführt ist, wo kann die selbe Position der Oberfläche optisch und taktil erfasst werden. Dabei kann der zweite Teilstrahl in einem in dem Tastarm vorgesehenen Lichtleiter geführt sein.

Eine genaue Bestimmung der Auslenkung des Tastarms und eine genaue optische Erfassung der Form, des Durchmessers und/oder der Rauhigkeit der Oberfläche kann dadurch erreicht werden, dass der erste Teilstrahl über eine erste optische Messsonde zu dem Reflektor geführt ist, dass der zweite Teilstrahl über eine zweite optische Messsonde zu der Oberfläche geführt ist und dass die optischen Messsonden als Interferometer ausgeführt sind. Es kann dann für das optische Messsystem beispielsweise ein Aufbau verwendet werden, wie er in der genannten Schrift EP 1 058 812 B1 prinzipiell beschrieben ist.

Sind die von dem Reflektor und der Oberfläche reflektierten Teilstrahle gemeinsam zu einer Auswerteeinheit des optischen Messsystems geführt, so muss zur separaten Auswertung der optischen und der taktilen Abtastung eine Trennung der beiden Teilstrahlen vor oder innerhalb der Auswerteeinheit des optischen Messsystems möglich sein. Dies kann dadurch erreicht werden, dass in dem Strahlengang des ersten Teilstrahls und/oder in dem Strahlengang des zweiten Teilstrahls ein optisches Element zur Veränderung zumindest einer Eigenschaft des jeweiligen Teilstrahls vorgesehen ist und dass in dem Strahlengang des reflektierten ersten Teilstrahls und/oder des reflektierten zweiten Teilstrahls vor oder innerhalb der Auswerteelektronik der optischen Auswerteeinheit ein weiteres optisches Element zur Trennung des ersten reflektieren Teilstrahls und des zweiten reflektierten Teilstrahls auf Grund der veränderten Eigenschaft des jeweiligen Teilstrahls vorgesehen ist. Die geänderte Eigenschaft kann zum Beispiel der Polarisationszustand, die Wellenlänge (Farbe) oder auch eine Laufzeit sein.

Entsprechend einer besonders bevorzugten Ausgestaltungsvariante kann es vorgesehen sein, dass als optische Auswerteeinheit eine interferometrische Messeinrichtung mit einem ersten Strahlengang mit einem ersten Strahl und einem zweiten Strahlengang mit einem zweiten Strahl vorgesehen ist, dass in einem Strahlengang der interferometrischen Messeinrichtung ein Verzögerungselement angeordnet ist, mit welchem zumindest ein erster Gangunterschied und ein zweiter Gangunterschied der optischen Wegstrecke zwischen den Strahlengängen einstellbar ist und wobei die Gangunterschiede größer als die Kohärenzlängen der verwendeten Strahlung sind, dass ein aus dem ersten Strahl und dem zweiten Strahl gebildeter Messstrahl dem taktilen Abtastsystem und dem optischen Abtastsystem zugeführt ist, dass die erste optische Messsonde zur Erfassung der Auslenkung des Tastarms und die zweite optische Messsonde zur optischen Erfassung der Form, des Durchmessers und/oder der Rauhigkeit der Oberfläche als Interferometer mit jeweils zwei Strahlengängen derart mit verschiedenen optischen Wegdifferenzen zwischen den Strahlengängen ausgelegt sind, dass der in der interferometrischen Messeinrichtung vorgegebene erste Gangunterschied von der ersten optischen Messsonde und der vorgegebene zweite Gangunterschied von der zweiten optischen Messsonde ausgeglichen wird. Der prinzipielle Aufbau und die prinzipielle Funktion des Aufbaus entsprechend so der in der Schrift EP 1 058 812 B1 beschriebenen interferometrischen Messeinrichtung. Durch die unterschiedlich einstellbaren Gangunterschiede in der interferometrischen Messeinrichtung kann dieser in einer ersten Einstellung an den Gangunterschied der ersten optischen Messsonde zur optischen Auswertung der taktilen Messung der Oberfläche und in einer zweiten Einstellung an den Gangunterschied der zweiten optische Messsonde zur optischen Messung der Form, des Durchmessers und/oder der Rauhigkeit der Oberfläche angepasst werden. In der ersten Einstellung kann nur der von dem Reflektor reflektierte erste Teilstrahl mit einem entsprechenden Referenzstrahl interferieren, wodurch die Messung der Auslenkung des Tastarms und somit die taktile Erfassung der Oberfläche ermöglicht wird. Der Gangunterschied des von der Oberfläche reflektieren zweiten Teilstrahls zu dem zugehörigen Referenzstrahl ist in dieser ersten Einstellung größer als die Kohärenzlänge der verwendeten Strahlung, eine Interferenz ist somit nicht möglich. In der zweiten Einstellung ist der Gangunterschied zwischen dem von dem Reflektor des taktilen Abtastsystems reflektierten ersten Teilstrahl zu dem entsprechenden Referenzstrahl größer als die Kohärenzlänge der Strahlung, es bilden sich keine Interferenzen aus. In der zweiten Einstellung interferiert hingegen der von der Oberfläche reflektiere zweite Teilstrahl des optischen Abtastsystems mit dem zugehörigen Referenzstrahl, wodurch die optische Erfassung der Form, des Durchmessers und/oder der Rauhigkeit der Oberfläche möglich wird. Durch die Wahl des Gangunterschiedes in dem als interferometrische Messeinrichtung ausgeführten optischen Messsystem kann so zwischen der taktilen und der optischen Erfassung der Oberfläche umgeschaltet werden.

Ein einfacher und störungstoleranter Aufbau kann dadurch erreicht werden, dass das optische Messsystem zumindest teilweise in Lichtleitertechnik aufgebaut ist. Dabei können sowohl die den Tastköpfen zugeführten wie die reflektierten Strahlen in Lichtleitern geführt sein.

Die das Verfahren betreffende Aufgabe der Erfindung wird dadurch gelöst, dass die Auslenkung des Tastarms des taktilen Abtastsystems und optisch die Form und/oder die Rauhigkeit der Oberfläche nach einem gleichen optischen Messverfahren mit einem gleichen optischen Messsystem und einer gemeinsamen optischen Auswerteeinheit erfasst werden. Durch die Verwendung einer gemeinsamen optischen Auswerteeinheit sowohl für die Erfassung der Auslenkung des Tastarms wie für die optische Erfassung der Form, des Durchmessers und/oder der Rauhigkeit der Oberfläche kann ein kostengünstiger und gleichzeitig präzise messender Aufbau realisiert werden.

Eine gemeinsame optische Auswerteeinheit für die taktile und die optische Erfassung der Oberfläche kann dadurch eingesetzt werden, dass ein Messstrahl der optischen Auswerteeinheit in zwei Teilstrahle aufgeteilt wird, dass ein erster Teilstrahl einem mit dem Tastarm des taktilen Abtastsystems mechanisch gekoppelten Reflektor zugeführt wird, dass ein zweiter Teilstrahl über den Tastarm der Oberfläche zugeführt wird und dass der von dem Reflektor reflektierte erste Teilstrahl und der von der Oberfläche reflektierte zweite Teilstrahl einer Auswerteelektronik der optischen Auswerteeinheit zugeführt und dort ausgewertet werden.

Kurze Beschreibung der Zeichnungen

Die Erfindung wird im Folgenden anhand eines in den Figuren dargestellten Ausführungsbeispiels näher erläutert. Es zeigen:

Figur 1 ein optisches Messsystem zur Erfassung der Form, des Durchmessers und/oder der Rauhigkeit einer Oberfläche,
Figur 2 ein optisches Messsystem nach dem Prinzip eines Weisslicht-Heterodyn-Interferometers.

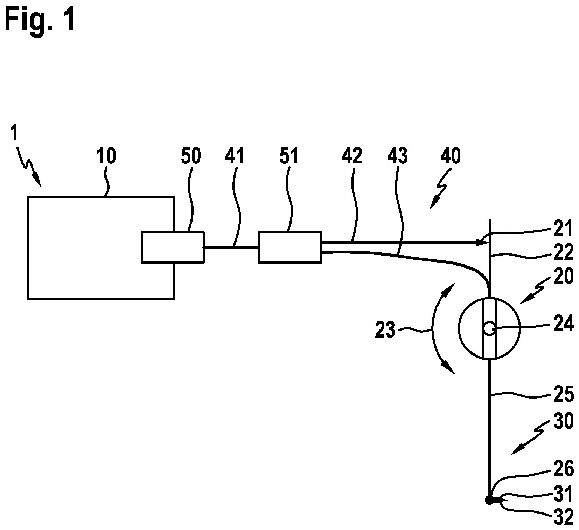

Figur 1 zeigt ein optisches Messsystem 1 zur Erfassung der Form, des Durchmessers und/oder der Rauhigkeit einer nicht dargestellten Oberfläche. Das optische Messsystem 1 ist mit Lichtleitern 40 aufgebaut und enthält eine optische Auswerteeinheit 10, welche, gegebenenfalls mit in den Lichtleitern 40 realisierten optischen Messsonden, ein optisches Abstands- oder Wegmesssystem darstellt. Dabei kann es sich beispielsweise um ein Weisslicht-Heterodyn-Interferometer, ein Weisslicht-Interferometer, einen chromatischen Sensor oder einen Autofokus-Sensor handeln.

Das optische Messsystem 1 ist aus der optischen Auswerteeinheit 10, einem ersten Stecker 50, einem ersten Lichtleiter 41, einem Strahlteiler 51, einem zweiten Lichtleiter 42 und einem dritten Lichtleiter 43 aufgebaut.

Ein taktiles Abtastsystem 20 besteht aus einem Tastarm 25 mit einem Tastelement 26, wobei der Tastarm 25 entsprechend einer dargestellten Drehrichtung 23 um eine Achse 24 drehbar gelagert ist. Ein Reflektor 22 ist mechanisch derart mit dem Tastarm 25 gekoppelt, dass er sich bei einer Auslenkung des Tastarms 25 mit bewegt.

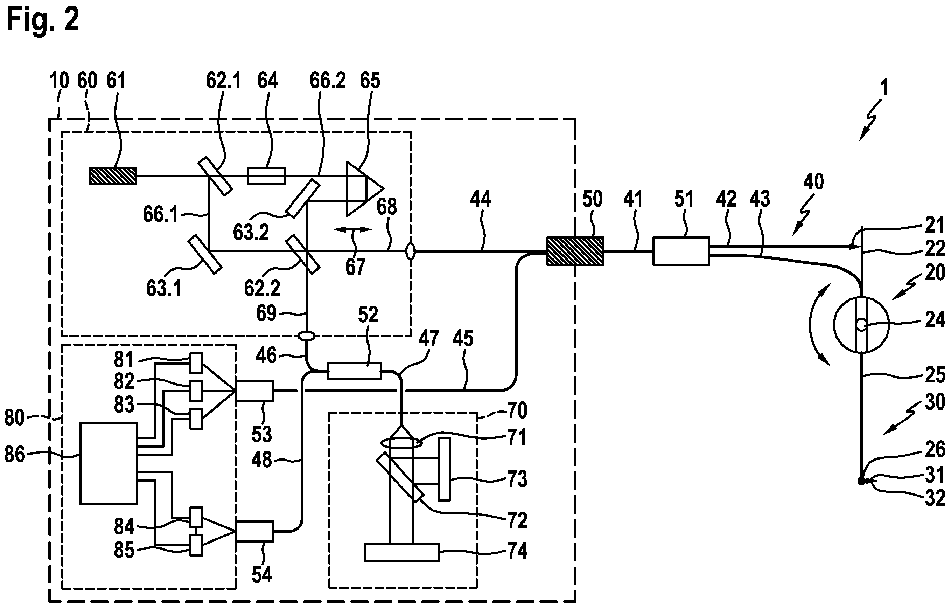

Ein in Figur 2 gezeigter Messstrahl 68 wird von der optischen Auswerteeinheit 10 über den ersten Stecker 50 in den ersten Lichtleiter 41 eingekoppelt und von dem Strahlteiler 51 in einen ersten Teilstrahl 21 und einen zweiten Teilstrahl 31 aufgeteilt. Der erste Teilstrahl 21 ist in dem ersten Lichtleiter 42 auf den Reflektor 22 des taktilen Abtastsystems 20 geführt. Der zweite Teilstrahl 31 ist über den zweiten Lichtleiter 43 zu dem Tastarm 25 und dort in dem Tastarm 25 zu dem Tastelement 26 geführt. Über einen optischen Tastausgang 32 wird der zweite Teilstrahl 31 auf die nicht dargestellte Oberfläche gelenkt. Die Bauelemente, in denen der zweite Teilstrahl 31 geführt ist, bilden ein optisches Abtastsystem 30.

Zur taktilen Messung der Form, des Durchmessers und der Rauhigkeit der Oberfläche wird der Tastarm 25 mit dem Tastelement 26 über die Oberfläche geführt. Entsprechend beispielsweise der Rauhigkeit der Oberfläche werden der Tastarm 25 und damit der Reflektor 22 ausgelenkt. Das optische Messsystem 1 erfasst optisch die Auslenkung des Reflektors 22 mit dem ersten Teilstrahl 21 und wertet so die taktile Abtastung der Oberfläche mit der optischen Auswerteeinheit 10 aus.

Das optische Abtastsystem 30 ist zur optischen Erfassung der Form, des Durchmessers und der Rauhigkeit der Oberfläche vorgesehen. Über den zweiten Teilstrahl 31 kann die Struktur der Oberfläche direkt nach bekannten optischen Verfahren erfasst werden. Dabei erfolgt die Auswertung über die selbe optische Auswerteeinheit 10, die auch für die Auswertung des taktilen Abtastsystems 20 vorgesehen ist.

Um die beiden Teilstrahlen 21, 31 in der optischen Auswerteeinheit 10 getrennt auswerten zu können, ist zumindest einem Teilstrahl 21, 31 durch nicht dargestellte optische Elemente in dem jeweiligen Strahlengang eine besondere Eigenschaft aufgeprägt. So kann der Polarisationszustand, die Farbe oder die Laufzeit eines oder jedes der Teilstrahle 21, 31 verändert werden, um in der optischen Auswerteeinheit 10 eine eindeutige Unterscheidung der Signale von dem taktilen Abtastsystem 20 und dem optischen Abtastsystem 30 zu ermöglichen.

Figur 2 zeigt das optische Messsystem 1 in einem Aufbau nach dem Prinzip eines Weisslicht-Heterodyn-Interferometers, wie es in der EP 1 058 812 B1 beschrieben ist. Dabei sind bereits in Figur 1 eingeführte Bauteile gleich bezeichnet.

Die optische Auswerteeinheit 10 ist aus einem Modulationsinterferometer 60 mit einer zugehörigen Auswerteelektronik 80, einer Referenzsonde 70 sowie die Einheiten verbindenden optischen Elementen in Lichtleitertechnik aufgebaut.

Das Modulationsinterferometer 60 besteht aus einer kurzkohärenten Strahlungsquelle 61, einem zweiten Strahlteiler 62.1 und einem dritten Strahlteiler 62.2, einem ersten Spiegel 63.1 und einem zweiten Spiegel 63.2, einem akustooptischen Modulator 64 sowie einem entsprechend einer vorgegebenen Verschieberichtung 67 einstellbaren Prisma 65. Der zweite Strahlteiler 62.1 teilt die von der kurzkohärenten Strahlungsquelle 61 ausgesendete Strahlung in einen ersten Strahl 66.1 und einen zweiten Strahl 66.2 auf. Der erste Strahl 66.1 und der zweite Strahl werden in dem dritten Strahlteiler überlagert, es bilden sich ein Messstahl 68 und ein Referenzstrahl 69. Der Messstrahl 68 ist über den ersten Stecker 50, den ersten Lichtleiter 41 und den Strahlteiler 51 zu dem taktilen Abtastsystem 20 und dem optischen Abtastsystem 30 geführt. Der Referenzstrahl 69 ist über einen sechsten Lichtleiter 46, einen zweiten Stecker 52 und einen siebten Lichtleiter 47 der Referenzsonde 70 zugeführt.

Die Referenzsonde 70 ist in bekannter Art aus einer Optik 71, einem vierten Strahlteiler 72, einer erste Reflektorfläche 73 und einer zweiten Reflektorfläche 74 aufgebaut.

Die von dem taktilen Abtastsystem 20 und dem optischen Abtastsystem 30 zurückkommende Strahlung wird über den Stecker 50, einen fünften Lichtleiter 45 und ein erstes optisches Element 53 der Auswerteelektronik 80 zugeführt. Entsprechend gelangt die von der Referenzsonde 70 zurückkommende Strahlung über den siebten Lichtleiter 47, den zweiten Stecker 52, einen achten Lichtleiter 48 und ein zweites optisches Element 54 zu der Auswerteelektronik 80.

Die Auswerteelektronik 80 beinhaltet fünf Photodioden 81, 82, 83, 84, 85 und eine Auswerteeinheit zur Phasenmessung 86. Die Photodiode $\lambda_1$ 81, die Photodiode $\lambda_2$ 82 und die Photodiode $\lambda_3$ 83 dienen der Messung der von dem taktilen Abtastsystem 20 und dem optischen Abtastsystem 30 kommenden Strahlung. Die Photodiode $R\lambda1$ 84 und die Photodiode $R\lambda2$ 85 messen die von der Referenzsonde 70 kommende Strahlung.

Das optische Messsystem 1 ist entsprechend in zwei Subsysteme aufgeteilt, die über Lichtleiter verbunden sind. Das erste Subsystem ist durch das Modulationsinterferometer 60 mit der zugehörigen Auswerteelektronik 80 gebildet und beinhaltet alle aktiven Komponenten wie die kurzkohärente Strahlungsquelle 61, den akustooptischen Modulator 64 und den Photoempfänger in Form der gezeigten fünf Photodioden 81, 82, 83, 84, 85. Das zweite Subsystem besteht aus mehreren Sonden, die zum Messen am Objekt, also an der Oberfläche, und zur Messung der Auslenkung des taktilen Tastarms 25 oder als Referenzsonde 70 angeordnet sind.

Die Strahlung der kurzkohärenten Strahlungsquelle 61 des Modulationsinterferometers 60 wird kollimiert und auf den ersten Strahl 66.1 und den zweiten Strahl 66.2 aufgeteilt. Die beiden Strahlen 66.1, 66.2 werden mit Hilfe des akustooptischen Modulators 64 gegenseitig in ihrer Frequenz verschoben, beispielsweise um eine Differenz der Frequenz von 100kHz. Durch das verschiebbare Prisma 65 in dem Strahlengang des zweiten Strahls 66.2 wird eine Differenz der optischen Wege der beiden Strahlen 66.1, 66.2, die länger als die Kohärenzlänge der verwendeten Strahlung ist, erzwungen. Die beiden Strahlen 66.1, 66.2 werden in dem dritten Strahlteiler 62.2 überlagert und als Messstrahl 68 und als Referenzstrahl 69 in zwei monomode Lichtleiter 46, 44 eingekoppelt. Auf Grund der optischen Wegdifferenz interferieren die Strahlen 66.1, 66.2 nicht. Der Messstrahl 68 und der Referenzstrahl 69 werden über die Lichtleiter 40 zur Referenzsonde 70 und zu der Tastarmanordnung geführt und dort ausgekoppelt. Die Referenzsonde 70, eine in dem zweiten Lichtleiter 42 angeordnete, nicht dargestellte erste optische Messsonde zur Messung der Auslenkung des taktilen Tastarms 25 und eine in dem Tastarm 25 vorgesehene nicht dargestellte zweite optische Messsonde zur optischen Erfassung der Form und der Rauhigkeit der Oberfläche sind als Interferometer, beispielsweise als Michelson-Interferometer oder als Fizeau-Interferometer, realisiert. Dabei entspricht die optische Wegdifferenz der in den optischen Messsonden gebildeten Teilstrahlen der optischen Wegdifferenz zwischen den beiden Strahlen 66.1, 66.2 des Modulationsinterferometers 60. In der gezeigten Ausführungsform ist die Referenzsonde 70 als Michelson-Interferometer ausgeführt.

Die erste und die zweite optische Messsonde arbeiten nach dem gleichen Prinzip. Der von dem Modulationsinterferometer 60 kommende Messstrahl 68 wird in einem Strahlteiler in einen Mess- und einen Referenzstrahl aufgeteilt. Der Messstrahl wird durch eine optische Anordnung auf die Oberfläche des Messobjekts, also den Reflektor 22 und die zu messende Oberfläche, fokussiert. Die reflektierte Strahlung wird mit dem jeweiligen Referenzstrahl überlagert und in die Lichtleiter 42, 43 eingekoppelt. Auf Grund des Wegdifferenzausgleichs können die Strahlen interferieren. Die Licht-Phasendifferenz beinhaltet Informationen über den Abstand zum Messobjekt.

In dem Strahlengang des ersten Teilstrahls 21 zur Bestimmung der Auslenkung des Tastarms 25 ist nicht dargestellt ein Farbfilter für die Wellenlänge $\lambda3$ vorgesehen. Dies ermöglicht die Trennung der Signale des optischen Abtastsystems 30 von denen des taktilen Abtastsystems 20. Dazu wird die von dem optischen Abtastsystem 30 und dem taktilen Abtastsystem 20 über den fünften Lichtleiter 45 zurückgeführte Strahlung einem ersten optischen Element 53 zugeführt. Das erste optische Element 53 beinhaltet einen Farbfilter. Die Strahlung wird in drei Teilstrahle unterschiedlicher Wellenlängen $\lambda1$, $\lambda2$, $\lambda3$ aufgeteilt und auf die jeweils zugehörige Photodiode $\lambda1$ 81, Photodiode $\lambda2$ 82 und Photodiode $\lambda3$ 83 fokussiert. Dabei nutzt das optische Abtastsystem 30 zwei Wellenlängen $\lambda1$ und $\lambda2$. Die Nutzung der zwei Wellenlängen (Zweiwellenlängen-Interferometrie) erweitert den Messbereich des optischen Abtastsystems 30. Das taktile Abtastsystem 20 nutzt die Wellenlänge $\lambda3$.

Jede Photodiode 81, 82, 83 liefert ein elektrisches Signal mit der durch den a-kustooptischen Modulator 64 erzeugten Differenzfrequenz und einer Phase $\Delta\varphi$, die mit dem Abstand zum Objekt $\Delta L$ und der zuge-

hörigen Wellenlänge λ zusammenhängt:

$$\Delta\varphi_1 = \frac{4 \cdot \pi}{\lambda_1} \cdot \Delta L$$

Durch die Messung der Phasendifferenz der Signale von mehreren Detektoren (Photodiode λ1 81 und Photodiode λ2 82) lässt sich der Abstand ΔL, der größer als die einzelne Wellenlängen der Strahlung sein darf, eindeutig bestimmen. So sind Interferometer, die mit zwei Wellenlängen arbeiten, bekannt. Der zu messende Abstand ΔL wird aus der Phasendifferenz (φ1 -φ2) der Signale berechnet:

$$\Delta L = \frac{\varphi_1 - \varphi_2}{4 \cdot \pi} \cdot \frac{\lambda_1 \cdot \lambda_2}{\lambda_1 - \lambda_2}$$

Der Term $\frac{\lambda_1 \cdot \lambda_2}{\lambda_1 - \lambda_2}$ wird als "synthetische Wellenlänge" A bezeichnet. Für die Wellenlängen λ1= 1,560μm und λ2= 1,530μm beträgt die synthetische Wellenlänge A = 79,6μm. Mit einem solchen Zweiwellenlängen-Interferometer ist es möglich, in einem Bereich von ± 20μm eindeutig zu messen, was für die Messung an rauen Oberflächen oder an Oberflächen mit unterbrochenen Profilen sehr vorteilhaft ist.

Neben der Trennung der Strahlen des optischen Abtastsystems 20 und des taktilen Abtastsystems 30 durch Farbfilter besteht eine weitere Möglichkeit zur Realisierung des Konzeptes mit zwei beziehungsweise nur einer Wellenlänge durch Verwendung eines Kohärenzmultiplexers. Die optischen Messsonden des taktilen Abtastsystems 20 und des optischen Abtastsystems 30 werden mit unterschiedlichen optischen Wegdifferenzen realisiert. Die Umschaltung zwischen taktiler und optischer Messung der Oberfläche erfolgt dann durch eine Anpassung der optischen Wegdifferenz zwischen dem ersten Strahl 66.1 und dem zweiten Strahl 66.2 in dem Modulationsinterferometer 60 durch eine entsprechende Verschiebung des verschiebbaren Prismas 65.

Die Messgenauigkeit der interferometrischen Messeinrichtung und des optischen Abtastsystems 20 wird durch Vergleich der Signale der Referenzsonde 70 mit den durch das optische Abtastsystem 30 bereitgestellten Signalen verbessert.

**Patentansprüche**

1. Tastsystem einer Messmaschine, mit einem taktilen Abtastsystem (20) mit einem zugeordneten Tastarm (25) zur berührenden Erfassung der Form, des Durchmessers und/oder der Rauhigkeit einer Oberfläche und mit einem optischen Abtastsystem (30) zur optischen Erfassung der Form, des Durchmessers und/oder der Rauhigkeit der Oberfläche, wobei für die Erfassung der Auslenkung des Tastarms (25) des taktilen Abtastsystems (20) und für die optische Erfassung der Form, des Durchmessers und/oder der Rauhigkeit der Oberfläche durch das optische Abtastsystem (30) das Tastsystem ein gleiches optisches Messsystem (1) mit einer gemeinsamen optischen Auswerteeinheit (10) aufweist, **dadurch gekennzeichnet, dass** ein Messstrahl (68) der optischen Auswerteeinheit (10) durch einen Strahlteiler (51) des Tastsystems oder einen optischen Schalter des Tastsystems in zwei Teilstrahlen (21, 31) aufgeteilt ist, dass ein erster Teilstrahl (21) zu dem taktilen Abtastsystem (20) und dort auf einen mit dem Tastarm (25) des taktilen Abtastsystems (20) mechanisch gekoppelten Reflektor (22) geführt ist, dass ein zweiter Teilstrahl (31) über das optische Abtastsystem (30) zu der Oberfläche geführt ist und dass der von dem Reflektor (22) reflektierte erste Teilstrahl (21) und der von der Oberfläche reflektierte zweite Teilstrahl (31) zu einer Auswerteelektronik (80) der optischen Auswerteeinheit (10) geführt sind.

2. Tastsystem nach Anspruch 1, **dadurch gekennzeichnet, dass** das optische Messsystem (1) als Weisslicht-Heterodyn-Interferometer oder als Weisslicht-Interferometer oder mit einem chromatischen Sensor oder mit einem Autofokus-Sensor aufgebaut ist.

3. Tastsystem nach Anspruch 1 oder 2, **dadurch gekennzeichnet, dass** der zweite Teilstrahl (31) zur optischen Erfassung der Form, des Durchmessers und/oder der Rauhigkeit der Oberfläche durch den Tastarm (25) des taktilen Abtastsystems (20) zu der Oberfläche geführt ist.

4. Tastsystem nach einem der Ansprüche 1 bis 3, **dadurch gekennzeichnet, dass** der erste Teilstrahl (21) über eine erste optische Messsonde zu dem Reflektor (22) geführt ist, dass der zweite Teilstrahl (31) über eine zweite optische Messsonde zu der Oberfläche geführt ist und dass die optischen Messsonden als Interferometer ausgeführt sind.

5. Tastsystem nach einem der Ansprüche 1 bis 4, **dadurch gekennzeichnet, dass** in dem Strahlengang des ersten Teilstrahls (21) und/oder in dem Strahlengang des zweiten Teilstrahls (31) ein optisches Element zur Veränderung zumindest einer Eigenschaft des jeweiligen Teilstrahls (21, 31) vorgesehen ist und dass in dem Strahlengang des reflektierten ersten Teilstrahls (21) und/oder des reflektierten zweiten Teilstrahls (31) vor oder innerhalb der Auswerteelektronik (80) der optischen Auswerteeinheit (10) ein weiteres optisches Element (53, 54) zur Trennung des ersten reflektieren Teilstrahls (21) und des zweiten reflektierten Teilstrahls (31) auf Grund der veränderten Eigenschaft des jeweiligen Teilstrahls (21, 31) vorgesehen ist.

6. Tastsystem nach einem der Ansprüche 1 bis 5, **dadurch gekennzeichnet, dass** als optische Auswerteeinheit (10) eine interferometrische Messeinrichtung mit einem ersten Strahlengang mit einem ersten Strahl (66.1) und einem zweiten Strahlengang mit einem zweiten Strahl (66.2) vorgesehen ist, dass in einem Strahlengang der interferometrischen Messeinrichtung ein Verzögerungselement angeordnet ist, mit welchem zumindest ein erster Gangunterschied und ein zweiter Gangunterschied der optischen Wegstrecke zwischen den Strahlengängen einstellbar ist und wobei die Gangunterschiede größer als die Kohärenzlängen der verwendeten Strahlung sind, dass ein aus dem ersten Strahl (66.1) und dem zweiten Strahl (66.2) gebildeter Messstrahl (68) dem taktilen Abtastsystem (20) und dem optischen Abtastsystem (30) zugeführt ist, dass die erste optische Messsonde zur Erfassung der Auslenkung des Tastarms (25) und die zweite optische Messsonde zur optischen Erfassung der Form, des Durchmessers und/oder der Rauhigkeit der Oberfläche als Interferometer mit jeweils zwei Strahlengängen derart mit verschiedenen optischen Wegdifferenzen zwischen den Strahlengängen ausgelegt sind, dass der in der interferometrischen Messeinrichtung vorgegebene erste Gangunterschied von der ersten optischen Messsonde und der vorgegebene zweite Gangunterschied von der zweiten optischen Messsonde ausgeglichen wird.

7. Tastsystem nach einem der Ansprüche 1 bis 6, **dadurch gekennzeichnet, dass** das optische Messsystem (1) zumindest teilweise in Lichtleitertechnik aufgebaut ist.

8. Verfahren zur Erfassung der Form, des Durchmessers und/oder der Rauhigkeit einer Oberfläche mit einer Messmaschine mit einem taktilen Abtastsystem (20) mit einem zugeordneten Tastarm (25) zur berührenden Erfassung der Form, des Durchmessers und/oder der Rauhigkeit der Oberfläche und mit einem optischen Abtastsystem (30) zur optischen Erfassung der Form, des Durchmessers und/oder der Rauhigkeit der Oberfläche, wobei die Auslenkung des Tastarms (25) des taktilen Abtastsystems (20) und optisch die Form und/oder die Rauhigkeit der Oberfläche nach einem gleichen optischen Messverfahren mit einem gleichen optischen Messsystem (1) und einer gemeinsamen optischen Auswerteeinheit (10) erfasst werden, **dadurch gekennzeichnet, dass** ein Messstrahl (68) der optischen Auswerteeinheit (10) in zwei Teilstrahlen (21, 31) aufgeteilt wird, dass ein erster Teilstrahl (21) einem mit dem Tastarm (25) des taktilen Abtastsystems mechanisch gekoppelten Reflektor (22) zugeführt wird, dass ein zweiter Teilstrahl (31) über den Tastarm (25) der Oberfläche zugeführt wird und dass der von dem Reflektor (22) reflektierte erste Teilstrahl (21) und der von der Oberfläche reflektierte zweite Teilstrahl (31) einer Auswerteelektronik (80) der optischen Auswerteeinheit (10) zugeführt und dort ausgewertet werden.

**Claims**

1. Probing system of a measuring machine, comprising a tactile scanning system (20) with an assigned probing arm (25) for capturing the form, the diameter and/or the roughness of a surface by contact and comprising an optical scanning system (30) for capturing the form, the diameter and/or the roughness of the surface optically, the probing system having an equivalent optical measuring system (1) comprising a common optical evaluation unit (10) for capturing the deflection of the probing arm (25) of the tactile scanning system (20) and for capturing the form, the diameter and/or the roughness of the surface optically by the optical scanning system (30), **characterized in that** a measurement beam (68) from the optical evaluation unit (10) is split by a beam splitter (51) of the probing system or by an optical switch of the probing system into two partial beams (21, 31), **in that** a first partial beam (21) is guided to the tactile scanning system (20) and, there, guided to a reflector (22) mechanically coupled to the probing arm (25) of the tactile scanning system (20), **in that** a second partial beam (31) is guided to the surface by way of the optical scanning system (30) and **in that** the first partial beam (21) reflected by the reflector (22) and the second partial beam (31) reflected by the surface are guided to evaluation electronics (80) of the optical evaluation unit (10).

2. Probing system according to Claim 1, **characterized in that** the optical measuring system (1) is configured as a white light heterodyne interferometer or as a white light interferometer or with a chromatic sensor or with an autofocus sensor.

3. Probing system according to Claim 1 or 2, **characterized in that** the second partial beam (31) for capturing the form, the diameter and/or the roughness of the surface optically is guided to the surface through the probing arm (25) of the tactile scanning system (20).

4. Probing system according to one of Claims 1 to 3, **characterized in that** the first partial beam (21) is guided to the reflector (22) via a first optical measuring probe, **in that** the second partial beam (31) is guided to the surface via a second optical measuring probe and **in that** the optical measuring probes are embodied as interferometers.

5. Probing system according to one of Claims 1 to 4, **characterized in that** an optical element for modifying at least one property of the respective partial beam (21, 31) is provided in the beam path of the first partial beam (21) and/or in the beam path of the second partial beam (31) and **in that** a further optical element (53, 54) for separating the first reflected partial beam (21) and the second reflected partial beam (31) on the basis of the modified property of the respective partial beam (21, 31) is provided in the beam path of the reflected first partial beam (21) and/or of the reflected second partial beam (31), upstream of or within the evaluation electronics (80) of the optical evaluation unit (10).

6. Probing system according to one of Claims 1 to 5, **characterized in that** an interferometric measuring device with a first beam path with a first beam (66.1) and a second beam path with a second beam (66.2) is provided as optical evaluation unit (10), **in that** a retardation element is arranged in a beam path of the interferometric measuring device, by means of which at least one first optical path difference and a second optical path difference of the optical path is adjustable between the beam paths and wherein the optical path differences are longer than the coherence lengths of the employed radiation, **in that** a measurement beam (68) formed by the first beam (66.1) and the second beam (66.2) is guided to the tactile scanning system (20) and the optical scanning system (30), **in that** the first optical measuring probe for capturing the deflection of the probing arm (25) and the second optical measuring probe for capturing the form, the diameter and/or the roughness of the surface optically as interferometers with two beam paths are configured with different optical path differences between the optical beam paths in such a way that the first optical difference predetermined in the interferometric measuring device is compensated by the first optical measuring probe and the predetermined second optical path difference is compensated by the second optical measuring probe.

7. Probing system according to one of Claims 1 to 6, **characterized in that** the optical measuring system (1) is at least partly constructed using optical waveguide technology.

8. Method for capturing the form, the diameter and/or the roughness of a surface using a measuring machine comprising a tactile scanning system (20) with an assigned probing arm (25) for capturing the form, the diameter and/or the roughness of the surface by contact and comprising an optical scanning system (30) for capturing the form, the diameter and/or the roughness of the surface optically, wherein the deflection of the probing arm (25) of the tactile scanning system (20) and, optically, the form and/or the roughness of the surface are captured according to an equivalent optical measuring method with an equivalent optical measuring system (1) and a common optical evaluation unit (10), **characterized in that** a measurement beam (68) of the optical evaluation unit (10) is subdivided into two partial beams (21, 31), **in that** a first partial beam (21) is guided to a reflector (22) mechanically coupled to the probing arm (25) of the tactile scanning system, **in that** a second partial beam (31) is guided to the surface via the probing arm (25) and **in that** the first partial beam (21) reflected by the reflector (22) and the second partial beam (31) reflected by the surface are guided to evaluation electronics (80) of the optical evaluation unit (10) and are evaluated there.

## Revendications

1. Système palpeur d'une machine de mesure, comportant un système palpeur tactile (20) auquel est associé un bras de balayage (25) destiné à la détection par contact de la forme, du diamètre et/ou de la rugosité d'une surface et ayant un système palpeur optique (30) destiné à la détection optique de la forme, du diamètre et/ou de la rugosité de la surface, dans lequel, pour la détection de la déviation du bras palpeur (25) du système palpeur tactile (20) et pour la détection optique de la forme, du diamètre et/ou de la rugosité de la surface par le système palpeur optique (30), le système palpeur comprend un même système optique (1) ayant une unité d'analyse optique (10) commune, **caractérisé en ce qu'**un faisceau de mesure (68) de l'unité d'analyse optique (10) est divisé en deux faisceaux partiels (21, 31) par un diviseur de faisceau (51) du système palpeur ou par un commutateur optique du système palpeur, **en ce qu'**un premier faisceau partiel (21) est acheminé vers le système palpeur tactile (20) et de là, vers un réflecteur (22) couplé mécaniquement au bras palpeur (25) du système palpeur tactile (20), **en ce qu'**un deuxième faisceau partiel (31) est acheminé vers la surface par l'intermédiaire du système palpeur optique (30) et **en ce que** le premier faisceau partiel (21) réfléchi par le réflecteur (22) et le deuxième faisceau partiel (31) réfléchi par la surface sont acheminés vers une électronique d'analyse (80) de l'unité d'analyse optique (10).

2. Système palpeur selon la revendication 1, **caractérisé en ce que** le système de mesure optique (1) est réalisé sous la forme d'un interféromètre hétérodyne en lumière blanche ou sous la forme d'un interféromètre en lumière blanche ou de manière à comporter un capteur chromatique ou à comporter un capteur à mise au point automatique.

3. Système palpeur selon la revendication 1 ou 2, **caractérisé en ce que** le deuxième faisceau partiel (31) destiné à la détection optique de la forme, du diamètre et/ou de la rugosité de la surface, est acheminé vers la surface par l'intermédiaire du bras palpeur (25) du système palpeur tactile (20).

4. Système palpeur selon l'une quelconque des revendications 1 à 3, **caractérisé en ce que** le premier faisceau partiel (21) est acheminé vers le réflecteur (22) par l'intermédiaire d'une première sonde de mesure optique, **en ce que** le deuxième faisceau partiel (31) est acheminé vers la surface par l'intermédiaire d'une deuxième sonde de mesure optique et **en ce que** les sondes de mesure optiques sont réalisées sous la forme d'interféromètres.

5. Système palpeur selon l'une quelconque des revendications 1 à 4, **caractérisé en ce qu'**il est prévu, sur le chemin de faisceau du premier faisceau partiel (21) et/ou sur le chemin de faisceau du deuxième faisceau partiel (31), un élément optique destiné à modifier au moins une propriété du faisceau partiel respectif (21, 31) et **en ce qu'**il est prévu, sur le chemin de faisceau du premier faisceau partiel (21) réfléchi et/ou du deuxième faisceau partiel (31) réfléchi, en amont ou à l'intérieur de l'électronique d'analyse (80) de l'unité d'analyse optique (10), un autre élément optique (53, 54) pour la séparation du premier faisceau partiel (21) réfléchi et du deuxième faisceau partiel (31) réfléchi en fonction de la propriété modifiée du faisceau partiel (21, 31) respectif.

6. Système palpeur selon l'une quelconque des revendications 1 à 5, **caractérisé en ce qu'**il est prévu, en tant qu'unité d'analyse optique (10), un dispositif de mesure interférométrique ayant un premier chemin de faisceau comportant un premier faisceau (66.1) et un deuxième chemin de faisceau comportant un deuxième faisceau (66.2), **en ce que**, sur un chemin de faisceau du dispositif de mesure interférométrique, se trouve un élément de retard au moyen duquel au moins une première différence de chemin et une deuxième différence de chemin des trajets optiques entre les chemins de faisceaux peuvent être réglées et dans lequel les différences de chemin sont supérieures aux longueurs de cohérence du rayonnement utilisé, **en ce qu'**un faisceau de mesure (68) formé à partir du premier faisceau (66.1) et du deuxième faisceau (66.2) est acheminé vers le système palpeur tactile (20) et vers le système palpeur optique (30), **en ce que** la première sonde de mesure optique destinée à la détection de la déviation du bras palpeur (25) et la deuxième sonde de mesure optique destinée à la détection optique de la forme, du diamètre et/ou de la rugosité de la surface, sont conçues sous la forme d'interféromètres ayant chacun deux chemins de faisceaux présentant des différences de trajets optiques différentes entre les chemins de faisceaux de manière à ce que la première différence de chemin de la première sonde de mesure optique prédéfinie dans le dispositif de mesure interférométrique et la deuxième différence de chemin prédéfinie de la deuxième sonde de mesure optique soient équilibrées.

7. Système palpeur selon l'une quelconque des revendications 1 à 6, **caractérisé en ce que** le système de mesure optique (1) est réalisé au moins partiellement par une technique de guide optique.

8. Procédé pour la détection de la forme, du diamètre et/ou de la rugosité d'une surface comportant une machine de mesure ayant un système palpeur tactile (20) auquel est associé un bras palpeur (25) pour la détection par contact de la forme, du diamètre et/ou de la rugosité de la surface et muni d'un système palpeur optique (30) pour la détection optique de la forme, du diamètre et/ou de la rugosité de la surface, dans lequel la déviation du bras palpeur (25) du système palpeur tactile (20) et la forme et/ou la rugosité de la surface sont détectées optiquement après un même trajet de mesure optique au moyen d'un même système de mesure optique (1) et d'une unité d'analyse optique (10) commune, **caractérisé en ce qu'**un faisceau de mesures (68) de l'unité d'analyse optique (10) est divisé en deux faisceaux partiels (21, 31), **en ce qu'**un premier faisceau partiel (21) est acheminé vers un réflecteur (22) couplé mécaniquement au bras palpeur (25) du système palpeur tactile, **en ce qu'**un deuxième faisceau partiel (31) est acheminé vers la surface par l'intermédiaire du bras palpeur optique (25) et **en ce que** le premier faisceau partiel (21) réfléchi par le réflecteur (22) et le deuxième faisceau partiel (31) réfléchi par la surface sont acheminés vers une électronique d'analyse (80) de l'unité d'analyse optique (10) et y sont analysés.

# Fig. 1

Fig. 2

**IN DER BESCHREIBUNG AUFGEFÜHRTE DOKUMENTE**

**In der Beschreibung aufgeführte Patentdokumente**

- DE 4327250 A1
- WO 03008905 A1
- EP 1528354 A2

- US 5955661 A1
- EP 1058812 B1